(19) Europäisches Patentamt
European Patent Office
Office européen des brevets

(11) **EP 3 836 342 B1**

(12) **EUROPÄISCHE PATENTSCHRIFT**

(45) Veröffentlichungstag und Bekanntmachung des Hinweises auf die Patenterteilung:
**07.08.2024   Patentblatt 2024/32**

(21) Anmeldenummer: **20209814.1**

(22) Anmeldetag: **25.11.2020**

(51) Internationale Patentklassifikation (IPC):
**H02J 7/00** *(2006.01)*

(52) Gemeinsame Patentklassifikation (CPC):
**H02J 7/0048**

(54) **VERFAHREN ZUR BESTIMMUNG EINER RESTLADEZEIT EINES BATTERIESYSTEMS MIT WENIGSTENS EINEM BATTERIEMODUL SOWIE EIN BATTERIESYSTEM ZUM AUSFÜHREN EINES SOLCHEN VERFAHRENS**

METHOD FOR DETERMINING A REMAINING CHARGING TIME OF A BATTERY SYSTEM WITH AT LEAST ONE BATTERY MODULE AND A BATTERY SYSTEM FOR CARRYING OUT SUCH A METHOD

PROCÉDÉ DE DÉTERMINATION D'UN TEMPS DE CHARGE RESTANT D'UN SYSTÈME DE BATTERIE POURVU D'AU MOINS UN MODULE DE BATTERIE AINSI QUE SYSTÈME DE BATTERIE PERMETTANT DE METTRE EN  OEUVRE LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2019   DE 102019219502**

(43) Veröffentlichungstag der Anmeldung:
**16.06.2021   Patentblatt 2021/24**

(73) Patentinhaber: **Robert Bosch GmbH**
**70442 Stuttgart (DE)**

(72) Erfinder:
• **Prause, Carsten**
**71640 Ludwigsburg-Ossweil (DE)**
• **Malsam, Johann**
**74369 Loechgau (DE)**
• **Tsarouchas, Dimitrios**
**70567 Stuttgart (DE)**
• **Mueller, Danny**
**75428 Illingen (DE)**
• **Ahlgrimm, Sven**
**74388 Talheim (DE)**
• **Nath, Alexander**
**74321 Bietigheim-Bissingen (DE)**

(56) Entgegenhaltungen:
**DE-A1- 102012 217 812     DE-A1- 102018 127 472**

**Beschreibung**

Stand der Technik

Die Erfindung geht aus von einem Verfahren zur Bestimmung einer Restladezeit eines Batteriesystems mit wenigstens einem Batteriemodul. Typischerweise werden der aktuelle Batterieladestrom und die aktuelle Kapazität des Batteriesystems zur Bestimmung der Restladezeit herangezogen.

Problematisch ist hierbei jedoch, dass auf gewisse variable Bedingungen nicht richtig oder überhaupt nicht eingegangen wird, wodurch die Restladezeit möglicherweise nicht korrekt bestimmt werden kann.

Das Dokument DE 10 2018 127 472 A1 offenbart ein Verfahren zum Vorbereiten eines Ladevorganges einer Batterie.

Das Dokument DE 10 2012 217 812 A1 offenbart eine Arbeitsmaschine umfassend eine Ladezeit-Schätzeinheit. Die Schätzeinheit schätzt eine erste Ladezeit, die zum Wiederherstellen einer Kapazität einer ersten Batterie von einer ersten geschätzten Restkapazität auf einen Sollkapazitätswert der ersten Batterie erforderlich ist, und eine zweite Ladezeit, die zum Wiederherstellen einer zweiten Batterie von einer zweiten geschätzten Restkapazität auf einen Sollkapazitätswert der zweiten Batterie erforderlich ist.

Offenbarung der Erfindung

Die Erfindung gemäss Anspruch 1 betrifft ein Verfahren zur Bestimmung einer Restladezeit eines Batteriesystems mit wenigstens einem Batteriemodul. Hierbei wird die Restladezeit ausgehend von einem ersten Zeitpunkt eines Ladevorgangs bestimmt, indem ein Quotient aus einer Delta-Kapazität des Batteriesystems zum ersten Zeitpunkt als Dividend und einem ersten Produkt aus einem Batterieladestrom zum ersten Zeitpunkt und einem ersten Faktor als Divisor gebildet wird, wobei der erste Faktor in Abhängigkeit von einem Ladezustand des wenigstens einen Batteriemoduls bestimmt wird.

Unter Restladezeit ist hierbei die Zeitdauer zu verstehen, welche das Batteriesystem voraussichtlich noch benötigt um ausgehend vom ersten Zeitpunkt aus vollständig aufgeladen zu werden.

Der erste Zeitpunkt ist hierbei ein beliebiger Zeitpunkt während eines Ladevorgangs, ab welchem die Restladezeit bestimmt werden soll. Anhand des ersten Zeitpunkts kann zudem die Dauer des aktuellen Ladevorgangs abgelesen werden. Ein Ladevorgang stellt hierbei die Zeitdauer dar, während welcher das Batteriesystem an einem Ladegerät mit mindestens einem Lader angeschlossen ist und von diesem aufgeladen wird.

Das Batteriesystem umfasst wenigstens ein Batteriemodul, es ist jedoch auch denkbar, dass das Batteriesystem mehrere miteinander verschaltete Batteriemodule aufweist. Das Batteriemodul kann hierbei insbesondere als elektrochemischer Akkumulator ausgestaltet sein. Das Batteriesystem ist insbesondere für ein Elektrofahrzeug oder auch ein Hybridfahrzeug vorgesehen.

Unter Delta-Kapazität ist die Differenz aus der maximalen Kapazität des Batteriesystems und der aktuellen Kapazität des Batteriesystems zu verstehen. Die maximale Kapazität des Batteriesystems kann beispielsweise hinterlegt sein oder im vollaufgeladenen Zustand bestimmt werden. Die Delta-Kapazität stellt folglich die Kapazität des Batteriemoduls dar, welche noch benötigt wird, um das Batteriemodul vom aktuellen Zustand heraus vollständig aufzuladen. Die aktuelle Kapazität ist hierbei die Kapazität des Batteriesystems zum ersten Zeitpunkt. Der Batterieladestrom entspricht des Weiteren dem Strom, welcher dazu benutzt wird, das Batteriesystem aufzuladen. Dieser kann beispielsweise mittels eines einfachen Amperemeters erfasst werden. Der Batterieladestrom ist typischerweise über einen Ladevorgang nicht konstant. Dies kann vorteilhafterweise durch das erfindungsgemäße Verfahren berücksichtigt werden.

Unter Ladezustand ist die prozentuale Verteilung von aktueller Kapazität zu maximaler Kapazität des Batteriesystems zu verstehen. Ist der Ladezustand 100%, ist das Batteriesystem beispielsweise vollständig und bei 50% nur halb aufgeladen. Der Ladezustand oder auch die aktuelle Kapazität des Batteriesystems kann beispielweise mittels eines Multimeters über die Ruhespannung oder auch durch Stromintegration bestimmt werden. Hierbei ist zusätzlich gegebenenfalls auf entsprechende Temperatureinflüsse zu achten. Der erste Faktor kann beispielsweise über eine Kennlinie oder auch ein Kennfeld ermittelt werden, wobei der Wert des ersten Faktors abhängig vom Ladezustand des Batteriemoduls ist.

Erfindungsgemäß wird folglich folgende Formel abgebildet:

$$T(t_1) = \frac{Q_{max} - Q(t_1)}{I(t_1) \times f_1} \qquad (1)$$

Hierbei ist $T$ die Restladezeit, $t_1$ der erste Zeitpunkt, $Q_{max}$ die maximale Kapazität des Batteriesystems, $Q(t_1)$ die Kapazität des Batteriesystems zum ersten Zeitpunkt, $I(t_1)$ der Batterieladestrom zum ersten Zeitpunkt und $f_1$ der

erste Faktor.

Vorteilhaft ist hierbei, dass die Restladezeit im Vergleich zum Stand der Technik genauer bestimmt werden kann, da bei der Bestimmung zusätzliche Effekte, wie beispielsweise der Ladezustand des Batteriesystems berücksichtigt werden. Zudem kann hierbei auch der Effekt berücksichtigt werden, welcher sich dadurch ergibt, dass sich beim Ladevorgang ab einem gewissen Ladezustand von Constant-Current auf Constant-Voltage umgeschaltet wird, wodurch sich typischerweise der Ladestrom reduziert.

In einer Ausgestaltung des erfindungsgemäßen Verfahrens ist vorgesehen, dass zusätzlich ein Abkühlzeitwert zum Quotienten hinzuaddiert wird, wobei der Abkühlzeitwert in Abhängigkeit von Eigenschaften des Batteriesystems bestimmt wird, insbesondere in Abhängigkeit von einer Anzahl an Batteriemodulen des Batteriesystems und/oder Ladern für das Batteriesystem.

Unter Eigenschaften des Batteriesystems sind beispielweise die Temperatur des Batteriesystems oder auch Umgebungsbedingungen der Batteriemodule bzw. des Batteriesystems zu verstehen.

So erhöht sich beispielsweise bei mehreren Batteriemodulen und mehreren Ladern die Gefahr, dass einzelne Batteriemodule überhitzen und zeitweise nicht mehr geladen werden können bis sie wieder abgekühlt sind.

Zudem kann es auch vorkommen, dass das Batteriesystem nach einer Fahrt des Fahrzeugs nicht direkt geladen werden kann. Dies liegt darin begründet, dass die Grenztemperatur für das Batteriesystem währen der Fahrt typischerweise höher ist als die Grenztemperatur für das Batteriesystem währen des Ladevorgangs.

Diese gewisse Dauer, in welcher das jeweilige Batteriemodul nicht geladen werden kann, erhöht entsprechend die Restladezeit des kompletten Batteriesystems, wobei dies durch den Abkühlzeitwert berücksichtigt werden kann. Der Abkühlzeitwert kann beispielsweise ebenfalls als Kennlinie oder Kennfeld hinterlegt sein, welche in Feldversuchen beim Betrieb eines identischen Batteriesystems ermittelt wurde. In der Kennlinie bzw. dem Kennfeld fließen dann beispielsweise die Anzahl der Batteriemodule und Lader mit ein und wie sich diese auf die Restladezeit auswirken.

Ausgehend von der Formel (1) gelangt man folglich zu folgender Formel:

$$T(t_1) = \frac{Q_{max} - Q(t_1)}{I(t_1) \times f_1} + T_{ab} \qquad (2)$$

Hierbei ist $T_{ab}$ der Abkühlzeitwert.

Vorteilhaft ist hierbei, dass weitere Bedingungen in die Bestimmung der Restladezeit mit einfließen, um die Genauigkeit des Ergebnisses weiter zu verbessern.

Erfindungsgemäss wird der Quotient zusätzlich mit einem Korrekturwert multipliziert, wobei der Korrekturwert in Abhängigkeit von Batterieeffekten in Abhängigkeit von einer Alterung des wenigstens einen Batteriemoduls bestimmt wird.

Unter Batterieeffekten ist die Alterung des Batteriesystems zu verstehen. Unter Alterung ist wiederum eine Zustandsänderung des Batteriesystems aufgrund der Lebensdauer des Batteriesystems oder auch aufgrund der Anzahl an Ladevorgänge, welche das Batteriesystem durchlaufen hat, zu verstehen. Die Alterung des Batteriesystems hat beispielsweise Auswirkungen auf die maximale Ladekapazität des Batteriesystems, welche im Laufe der Zeit typischerweise abnimmt.

Des Weiteren kann unter Batterieeffekt beispielsweise auch die Temperatur des jeweiligen Batteriemoduls verstanden werden. So nimmt beispielsweise der Ladestrom mit einer Zunahme der Temperatur des Batteriemoduls ab.

Der Korrekturwert kann hierbei erneut als Kennlinie oder auch als Kennfeld hinterlegt sein, welche beispielsweise in Versuchen zuvor ermittelt wurde, wobei in der Kennlinie bzw. dem Kennfeld beispielsweise der Korrekturwert über die Lebensdauer des Batteriesystems aufgetragen ist.

Ausgehend von der Formel (1) gelangt man folglich zu folgender Formel:

$$T(t_1) = \frac{Q_{max} - Q(t_1)}{I(t_1) \times f_1} \times K \qquad (3)$$

Hierbei ist K der Korrekturwert.

Vorteilhaft ist hierbei, dass weitere Bedingungen in die Bestimmung der Restladezeit mit einfließen, um die Genauigkeit des Ergebnisses weiter zu verbessern.

Gemäß einer Ausgestaltung des erfindungsgemäßen Verfahrens ist vorgesehen, dass im Divisor zusätzlich ein zweites Produkt aus einem integrierten Batterieladestrom über einen vorgegebenen Zeitraum und einem zweiten Faktor zum ersten Produkt addiert wird, wobei der zweite Faktor insbesondere in Abhängigkeit vom Ladezustand des wenigstens einen Batteriemoduls bestimmt wird, wobei die Summe der Faktoren eins ergibt, und wobei der Zeitraum insbesondere die Zeitdauer des aktuellen Ladevorgangs des Batteriesystems ist.

Ausgehend von der Formel (1) gelangt man folglich zu folgender Formel:

$$T\left(t_1\right) = \frac{Q_{max} - Q(t_1)}{I(t_1) \times f_1 + \left(\int_{0_{Zyk}}^{t_1} I(t_1)\right) \times f_2} \qquad (4)$$

Hierbei ist $0_{Zyk}$ der zeitliche Startpunkt des aktuellen Ladevorgangs und $f_2$ der zweite Faktor.

Vorteilhaft ist hierbei, dass mittels des zweiten Produkts zusätzlich mittelfristige Messwerte des Batterieladestroms mit in die Bestimmung der Restladezeit mit einfließen können, wodurch die zu bestimmende Restladezeit des Batteriesystems noch exakter bestimmt werden kann. Das zweite Produkt stellt hierbei den über den Ladevorgang gemittelten Batterieladestrom dar.

Gemäß einer Ausgestaltung des erfindungsgemäßen Verfahrens ist vorgesehen, dass im Divisor zusätzlich ein weiteres Produkt aus einem integrierten Batterieladestrom über einen vorgegebenen weiteren Zeitraum und einem weiteren Faktor zum ersten Produkt addiert wird, wobei der weitere Faktor in Abhängigkeit vom Ladezustand des wenigstens einen Batteriemoduls bestimmt wird, wobei der weitere Zeitraum insbesondere die Zeitdauer aller bisherigen Ladevorgänge des Batteriesystems ist.

Vorteilhaft ist hierbei, dass mittels des weiteren Produkts zusätzlich langfristige Messwerte des Batterieladestroms mit in die Bestimmung der Restladezeit mit einfließen können, wodurch die zu bestimmende Restladezeit des Batteriesystems noch exakter bestimmt werden kann. Das weitere Produkt stellt hierbei den über alle bisherigen Ladevorgänge gemittelten Batterieladestrom dar.

Ausgehend von der Formel (1) gelangt man folglich zu folgender Formel:

$$T\left(t_1\right) = \frac{Q_{max} - Q(t_1)}{I(t_1) \times f_1 + \left(\int_{0_{ges}}^{t_1} I(t_1)\right) \times f_3} \qquad (5)$$

Hierbei ist $0_{ges}$ der zeitliche Startpunkt des ersten Ladevorgangs des Batteriesystems und $f_3$ der weitere Faktor.

Gemäß einer Ausgestaltung des erfindungsgemäßen Verfahrens ist vorgesehen, dass die Faktoren in Abhängigkeit vom ersten Zeitpunkt und/oder vom Ladezustand des wenigstens einen Batteriemoduls gewichtet werden. Vorteilhaft ist hierbei, dass je nach Zeitpunkt im Ladevorgang die Gewichtung der einzelnen Produkte des Divisors unterschiedlich gewichtet werden können, um die Bestimmung der Restladezeit zu optimieren. So kann zu Beginn des Ladevorgangs das weitere Produkt am stärksten gewichtet werden, da hier die Langzeitwerte mit einfließen, wohingegen am Ende des Ladevorgangs das erste Produkt stärker gewichtet werden kann, da hier die batterietypischen Eigenschaften sich auf den Batterieladestrom auswirken und folglich dies die stärkste Auswirkung auf die Restladezeit hat. Des Weiteren kann beispielsweise in der Mitte des Ladevorgangs das zweite Produkt am stärksten gewichtet werden, da hier die integrierten Stromwerte des aktuellen Ladevorgangs mit einfließen.

Zudem kann berücksichtigt werden, wenn beispielsweise der Ladevorgang schon entsprechend andauert, der Ladezustand aber unterdurchschnittlich für diese Zeitdauer des Ladevorgangs ist. Hierdurch kann angenommen werden, dass die Eigenschaften oder auch die Umgebungsbedingungen des Batteriesystems eine schnellere Aufladung nicht zulassen, wodurch sich die Restladezeit entsprechend verlängern könnte.

Die Gewichtung der Faktoren kann beispielsweise in den einzelnen Kennlinien oder Kennfeldern der Faktoren bereits berücksichtigt sein oder auch als separate Kennlinien bzw. Kennfelder hinterlegt sein und dann im Verfahren in die Faktoren miteinfließen.

Zudem ist es denkbar, dass man die zuvor genannten Ausgestaltungen des erfindungsgemäßen Verfahrens beliebig miteinander kombiniert.

Die Kombination der Formeln (1), (2), (3), (4) und (5) ergibt beispielsweise folgende Formel:

$$T\left(t_1\right) = \frac{Q_{max} - Q(t_1)}{I(t_1) \times f_1 + \left(\int_{0_{Zyk}}^{t_1} I(t_1)\right) \times f_2 + \left(\int_{0_{ges}}^{t_1} I(t_1)\right) \times f_3} \times K + T_{ab} \qquad (6)$$

Die Erfindung betrifft zudem ein Batteriesystem mit wenigstens einem Batteriemodul und einer Verarbeitungseinheit, wobei die Verarbeitungseinheit dazu eingerichtet ist, ein erfindungsgemäßes Verfahren durchzuführen.

Die Verarbeitungseinheit kann beispielsweise ein Mikrocontroller sein.

Zeichnungen

Fig. 1 zeigt ein Ausführungsbeispiel eines erfindungsgemäßen Verfahrens zum Bestimmung einer Restladezeit eines Batteriesystems.

Fig. 2 zeigt ein Ausführungsbeispiel eines erfindungsgemäßen Batteriesystems.

Beschreibung von Ausführungsbeispielen

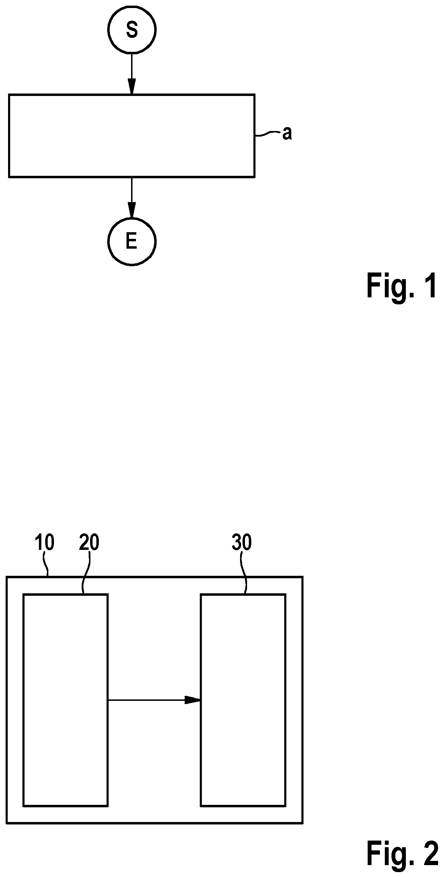

Fig. 1 zeigt ein Ausführungsbeispiel eines erfindungsgemäßen Verfahrens zum Bestimmung einer Restladezeit eines Batteriesystems.

Das Verfahren weist hierbei einen Verfahrensschritt a auf, in welchem die Restladezeit ausgehend von einem ersten Zeitpunkt eines Ladevorgangs bestimmt wird, indem ein Quotient aus einer Delta-Kapazität des Batteriesystems 10 zum ersten Zeitpunkt als Dividend und einem ersten Produkt aus einem Batterieladestrom zum ersten Zeitpunkt und einem ersten Faktor als Divisor gebildet wird. Hierbei wird der erste Faktor in Abhängigkeit von einem Ladezustand des wenigstens einen Batteriemoduls 20 bestimmt. Der erste Faktor wird aus einer abgespeicherten ersten Kennlinie bzw. einem ersten Kennfeld ermittelt.

Optional wird im Verfahrensschritt a zusätzlich ein Abkühlzeitwert zum Quotienten hinzuaddiert, wobei der Abkühlzeitwert in Abhängigkeit von Eigenschaften des Batteriesystems 10 bestimmt wird, insbesondere in Abhängigkeit von einer Anzahl an Batteriemodulen 20 des Batteriesystems 10 und/oder Ladern für das Batteriesystem 10.

Des Weiteren wird im Verfahrensschritt a der Quotient zusätzlich mit einem Korrekturwert multipliziert, wobei der Korrekturwert in Abhängigkeit von Batterieeffekten in Abhängigkeit von einer Alterung des wenigstens einen Batteriemoduls 20 bestimmt wird.

Zudem kann im Verfahrensschritt a im Divisor zusätzlich ein zweites Produkt aus einem integrierten Batterieladestrom über einen vorgegebenen Zeitraum und einem zweiten Faktor zum ersten Produkt addiert werden, wobei der zweite Faktor insbesondere in Abhängigkeit vom Ladezustand des wenigstens einen Batteriemoduls 20 bestimmt wird, wobei die Summe der Faktoren eins ergibt, und wobei der Zeitraum insbesondere die Zeitdauer des aktuellen Ladevorgangs des Batteriesystems 10 ist.

Alternativ oder zusätzlich kann im Verfahrensschritt a im Divisor zusätzlich ein weiteres Produkt aus einem integrierten Batterieladestrom über einen vorgegebenen weiteren Zeitraum und einem weiteren Faktor zum ersten Produkt addiert wird, wobei der weitere Faktor in Abhängigkeit vom Ladezustand des wenigstens einen Batteriemoduls 20 bestimmt wird, wobei der weitere Zeitraum insbesondere die Zeitdauer aller bisherigen Ladevorgänge des Batteriesystems 10 ist.

Insbesondere können die Faktoren in Abhängigkeit vom ersten Zeitpunkt und/oder vom Ladezustand des wenigstens einen Batteriemoduls 20 gewichtet werden.

Fig. 2 zeigt ein Ausführungsbeispiel eines erfindungsgemäßen Batteriesystems.

Dargestellt ist ein Batteriesystem 10. Das Batteriesystem 10 weist ein Batteriemodul 20 auf.

Zudem weist das Batteriesystem 10 eine Verarbeitungseinheit 30 auf.

Die Verarbeitungseinheit 30 kann beispielsweise ein Mikrocontroller sein.

Die Verarbeitungseinheit 30 ist dazu eingerichtet, ein erfindungsgemäßes Verfahren durchzuführen wie es beispielsweise in der Fig. 1 beschrieben ist. Hierfür kann die Verarbeitungseinheit 30 beispielsweise eine nicht dargestellte Speichereinheit aufweisen oder auf eine nicht dargestellte Speichereinheit des Batteriesystems 10 zugreifen, wobei die Verarbeitungseinheit 30 beispielsweise dazu eingerichtet sein kann, für die Bestimmung der Restladezeit auf in der Speichereinheit hinterlegte Kennlinien oder Kennfeld zuzugreifen.

Des Weiteren ist die Verarbeitungseinheit 30 dazu eingerichtet, eine Ladekapazität und einen aktuellen Batterieladestrom zu erfassen, wobei das Batteriesystem 10 hierfür entsprechend ausgestaltet ist, beispielsweise mittels eines bildlich nicht dargestellten Amperemeters zur Erfassung des Batterieladestroms.

## Patentansprüche

1. Verfahren zur Bestimmung einer Restladezeit eines Batteriesystems (10) mit wenigstens einem Batteriemodul (20), wobei die Restladezeit ausgehend von einem ersten Zeitpunkt eines Ladevorgangs bestimmt wird, indem ein Quotient aus einer Delta-Kapazität des Batteriesystems (10), wobei die Delta-Kapazität eine Differenz aus der maximalen Kapazität des Batteriesystems (10) und der aktuellen Kapazität des Batteriesystems (10) repräsentiert, zum ersten Zeitpunkt als Dividend und einem ersten Produkt aus einem Batterieladestrom zum ersten Zeitpunkt und einem ersten Faktor als Divisor gebildet wird, wobei der erste Faktor in Abhängigkeit von einem Ladezustand des wenigstens einen Batteriemoduls (20) aus einer abgespeicherten ersten Kennlinie bzw. einem ersten Kennfeld, bestimmt wird, wobei der Quotient zusätzlich mit einem Korrekturwert multipliziert wird, wobei der Korrekturwert in Abhängigkeit von Batterieeffekten in Abhängigkeit von einer Alterung des wenigstens einen Batteriemoduls (20) bestimmt wird, wobei die Alterung wiederum eine Zustandsänderung des Batteriesystems aufgrund der Lebensdauer des Batteriesystems oder aufgrund der Anzahl an Ladevorgängen, welche das Batteriesystem durchlaufen hat, ist.

**2.** Verfahren nach Anspruch 1, **dadurch gekennzeichnet, dass** zusätzlich ein Abkühlzeitwert zum Quotienten hinzuaddiert wird, wobei der Abkühlzeitwert in Abhängigkeit von Eigenschaften des Batteriesystems (10) bestimmt wird, insbesondere in Abhängigkeit von einer Anzahl an Batteriemodulen (20) des Batteriesystems (10) und/oder Ladern für das Batteriesystem (10).

**3.** Verfahren nach einem der vorherhergehenden Ansprüche, **dadurch gekennzeichnet, dass** im Divisor zusätzlich ein zweites Produkt aus einem integrierten Batterieladestrom über einen vorgegebenen Zeitraum und einem zweiten Faktor zum ersten Produkt addiert wird, wobei der zweite Faktor insbesondere in Abhängigkeit vom Ladezustand des wenigstens einen Batteriemoduls (20) bestimmt wird, wobei die Summe der Faktoren eins ergibt, und wobei der Zeitraum insbesondere die Zeitdauer des aktuellen Ladevorgangs des Batteriesystems (10) ist.

**4.** Verfahren nach einem der vorherhergehenden Ansprüche, **dadurch gekennzeichnet, dass** im Divisor zusätzlich ein weiteres Produkt aus einem integrierten Batterieladestrom über einen vorgegebenen weiteren Zeitraum und einem weiteren Faktor zum ersten Produkt addiert wird, wobei der weitere Faktor in Abhängigkeit vom Ladezustand des wenigstens einen Batteriemoduls (20) bestimmt wird, wobei der weitere Zeitraum insbesondere die Zeitdauer aller bisherigen Ladevorgänge des Batteriesystems (10) ist.

**5.** Verfahren nach Anspruch 3 oder 4, **dadurch gekennzeichnet, dass** die Faktoren in Abhängigkeit vom ersten Zeitpunkt und/oder vom Ladezustand des wenigstens einen Batteriemoduls (20) gewichtet werden.

**6.** Batteriesystem (10) mit wenigstens einem Batteriemodul (20) und einer Verarbeitungseinheit (30), wobei die Verarbeitungseinheit (30) dazu eingerichtet ist, ein Verfahren nach einem der vorhergehenden Ansprüche durchzuführen.

## Claims

**1.** Method for determining a remaining charging time of a battery system (10) having at least one battery module (20), wherein the remaining charging time is determined starting from a first time of a charging operation by forming a quotient of a delta capacity of the battery system (10), wherein the delta capacity represents a difference between the maximum capacity of the battery system (10) and the current capacity of the battery system (10), at the first time as the dividend and a first product of a battery charging current at the first time and a first factor as the divisor, wherein the first factor is determined from a stored first characteristic curve or a first characteristic diagram on the basis of a state of charge of the at least one battery module (20), wherein the quotient is additionally multiplied by a correction value, wherein the correction value is determined on the basis of battery effects on the basis of ageing of the at least one battery module (20), wherein the ageing is in turn a state change of the battery system on account of the service life of the battery system or on account of the number of charging operations through which the battery system has run.

**2.** Method according to Claim 1, **characterized in that** a cooling time value is additionally added to the quotient, wherein the cooling time value is determined on the basis of properties of the battery system (10), in particular on the basis of a number of battery modules (20) of the battery system (10) and/or chargers for the battery system (10).

**3.** Method according to one of the preceding claims, **characterized in that** a second product of an integrated battery charging current over a predefined period and a second factor is additionally added to the first product in the divisor, wherein the second factor is determined, in particular, on the basis of the state of charge of the at least one battery module (20), wherein the sum of the factors is one, and wherein the period is, in particular, the duration of the instantaneous charging operation of the battery system (10).

**4.** Method according to one of the preceding claims, **characterized in that** a further product of an integrated battery charging current over a predefined further period and a further factor is additionally added to the first product in the divisor, wherein the further factor is determined on the basis of the state of charge of the at least one battery module (20), wherein the further period is, in particular, the duration of all previous charging operations of the battery system (10).

**5.** Method according to Claim 3 or 4, **characterized in that** the factors are weighted on the basis of the first time and/or the state of charge of the at least one battery module (20).

6. Battery system (10) having at least one battery module (20) and a processing unit (30), wherein the processing unit (30) is configured to carry out a method according to one of the preceding claims.

**Revendications**

1. Procédé de détermination d'un temps de charge restant d'un système de batterie (10) comprenant au moins un module de batterie (20), le temps de charge restant étant déterminé à partir d'un premier instant d'un processus de charge en calculant un quotient d'une capacité delta du système de batterie (10), la capacité delta représentant une différence entre la capacité maximale du système de batterie (10) et la capacité actuelle du système de batterie (10), au premier instant en tant que dividende et d'un premier produit d'un courant de charge de batterie au premier instant et d'un premier facteur en tant que diviseur, le premier facteur étant déterminé en fonction d'un état de charge de l'au moins un module de batterie (20) à partir d'une première courbe caractéristique mémorisée ou d'un premier diagramme caractéristique, le quotient étant en outre multiplié par une valeur de correction, la valeur de correction étant déterminée en fonction des effets de la batterie en fonction d'un vieillissement de l'au moins un module de batterie (20), le vieillissement étant à son tour un changement d'état du système de batterie en raison de la durée de vie du système de batterie ou en raison du nombre de processus de charge par lesquels est passé le système de batterie.

2. Procédé selon la revendication 1, **caractérisé en ce qu'**en plus une valeur de temps de refroidissement est ajoutée au quotient, la valeur de temps de refroidissement étant déterminée en fonction de propriétés du système de batterie (10), notamment en fonction d'un nombre de modules de batterie (20) du système de batterie (10) et/ou de chargeurs pour le système de batterie (10).

3. Procédé selon l'une des revendications précédentes, **caractérisé en ce qu'**un deuxième produit, composé d'un courant de charge de batterie intégré sur une période prédéterminée et d'un deuxième facteur, est ajouté au premier produit dans le diviseur, le deuxième facteur étant notamment déterminé en fonction de l'état de charge de l'au moins un module de batterie (20), la somme des facteurs étant égale à un, et la période étant notamment la durée du processus de charge actuel du système de batterie (10).

4. Procédé selon l'une des revendications précédentes, **caractérisé en ce qu'**un produit supplémentaire, composé d'un courant de charge de batterie intégré sur une période supplémentaire prédéterminée et d'un facteur supplémentaire, est ajouté au premier produit dans le diviseur, le facteur supplémentaire étant notamment déterminé en fonction de l'état de charge de l'au moins un module de batterie (20), la période supplémentaire étant notamment la durée de tous les processus de charge effectués jusqu'à présent du système de batterie (10).

5. Procédé selon la revendication 3 ou 4, **caractérisé en ce que** les facteurs sont pondérés en fonction du premier instant et/ou de l'état de charge de l'au moins un module de batterie (20).

6. Système de batterie (10) comprenant au moins un module de batterie (20) et une unité de traitement (30), l'unité de traitement (30) étant conçue pour mettre en oeuvre un procédé selon l'une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018127472 A1
- DE 102012217812 A1